# EUROPEAN PATENT APPLICATION

(11) **EP 2 100 860 A2**
(43) Date of publication of application: **16.09.2009**
(21) Application number: 08168707.1
(22) Date of filing: 10.11.2008
(51) Int. Cl.: C03B 33/033, C03B 33/07

(54) **Machine for cutting glass sheets in general and laminated glass sheets in particular**

(30) Priority: 13.03.2008 IT MI20080425
(71) Applicant: Macotec S.R.L., 23010 Rogolo (SO) (IT)
(72) Inventor: Colli, Maurizio, 23019 Traona SO (IT)
(74) Representative: Modiano, Micaela Nadia

(57) **Abstract**

A machine for cutting glass sheets in general and laminated glass sheets (4) in particular, comprising, on a supporting frame (2), a table (3) for supporting the sheets (4) being worked with a fixed crossmember (5) that supports means (6) for removable retention of the sheet being worked, there being also lower (8) and upper (7) scoring heads, lower and upper cut-running means, and a movable crossmember (10), which is arranged on the opposite side of the fixed crossmember (5) with respect to the scoring and cut-running line and supports means (11) for clamping the sheet (4) being worked, which are connected to means (21) for translational motion along a line of motion substantially at right angles to the scoring and cut-running line, the clamping means (11) can perform a translational motion, in the position for fastening on the sheet, along both directions of the movement line.

## Description

The present invention relates to a machine for cutting glass sheets in general and laminated glass sheets in particular.

As is known, machines for cutting laminated glass sheets typically simultaneously score the lower and upper sheets, open the upper and lower scoring lines, and separate the two glass panes, with optional cutting of the plastic film arranged between the two sheets.

Work is generally performed on an apparatus that has a worktable on which a fixed crossmember is provided that supports the cutting heads as well as the means for gripping and cut-running the sheets.

Moreover, a movable crossmember is provided, on which there are means for clamping the sheet which act to space the parts, once cut-running of the sheets has been performed.

In known types of solutions, the movable crossmember has clamping means that engage the sheet being worked only during the step for spacing the separated pieces.

This type of structure causes the execution of trimming on the edge of the sheet, i.e., the separation and expulsion of sheet portions measuring a few centimeters, to be particularly difficult, since it becomes physically impossible to remove small sheet pieces due to mutual interference among the components of the machine.

Another problem encountered with known types of machines resides in that during the step for parting the cut sheets, tensions are created on the plastic layer which can lead to delamination, i.e., to fraying of the plastic separator layer interposed between the two sheets.

The aim of the invention is to eliminate the drawbacks noted above, by providing a machine for cutting glass sheets in general and laminated glass sheets in particular, that allows to optimize all the steps of operation, with the possibility to perform automatic trimming up to a few centimeters from the edge of the sheet, automating the handling and removal of the cut portion.

Within this aim, an object of the invention is to provide a machine that allows to automate all the steps of operation, automatically spacing apart the cut glass piece and any trimming, carrying them to a collection and discharge region, allowing the operator to work more comfortably and in full safety.

Another object of the present invention is to provide a machine that has higher productivity, avoiding as much as possible the manual intervention of the operator.

Still another object of the present invention is to provide a machine for cutting glass sheets in general and laminated glass sheets in particular which, thanks to its particular constructive characteristics, is capable of giving the greatest assurances of reliability and safety in use.

This aim, as well as these and other objects that will become better apparent hereinafter, are achieved by a machine for cutting glass sheets in general and laminated glass sheets in particular, comprising, on a supporting frame, a table for supporting the sheets being worked with a fixed crossmember that supports means for removable retention of the sheet being worked, there being also lower and upper scoring heads, lower and upper cut-running means, and a movable crossmember arranged on the opposite side of said fixed crossmember with respect to the scoring and cut-running line, said movable crossmember supporting means for clamping said sheet being worked, which are connected to means for translational motion along the line of motion with an orientation that is substantially perpendicular to said scoring and cut-running line, characterized in that said clamping means can perform a translational motion, in the position for fastening on said sheet, along both directions of said movement line.

Further characteristics and advantages of the present invention will become better apparent from the description of a preferred but not exclusive embodiment of a machine for cutting glass sheets in general and laminated glass sheets in particular, illustrated by way of non-limiting example in the accompanying drawings, wherein:

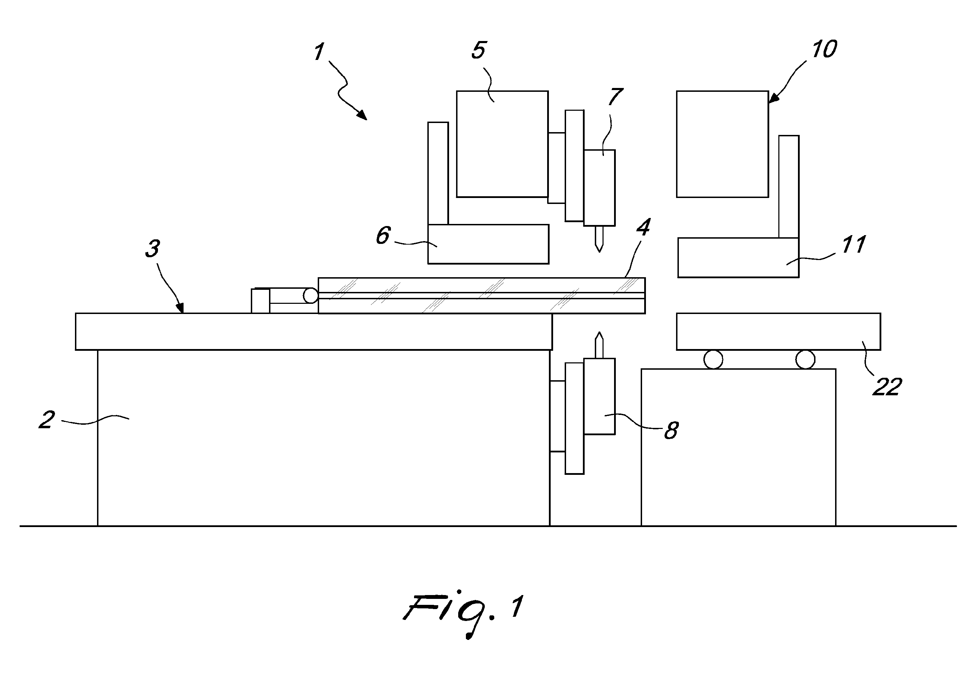

Figure 1 is a schematic view of a machine for cutting glass sheets in general, according to the invention;
Figure 2 is a view of the step of scoring the sheet;
Figure 3 is a view of the machine with the sheet after scoring and cut-running;
Figure 4 is a view of the step of engagement with the scored sheet in order to perform separation;
Figure 5 is a schematic view of the machine with the cut-run trimming separated;
Figure 6 is a view of the step of moving the cut-run trimming back against the sheet being worked;
Figure 7 is a view of the step of moving the trimming by means of the remaining portion of the sheet;
Figure 8 is a view of the step of moving the trimming away;
Figure 9 is a view of the step of automatic positioning of the sheet to be cut-run by way of positioning means;
Figure 10 is a view of the step of scoring the sheet to be cut;
Figure 11 is a view of the separation of the cut-run sheet;
Figure 12 is a view of the step of positioning the positioning and translational motion means;
Figure 13 is a view of the step of transferring the cut sheet;
Figure 14 is a plan view of the machine during the sheet positioning step;
Figure 15 is a plan view of the machine after transferring the cut sheet;
Figure 16 is a schematic view of the means for translational motion of the movable crossmember;

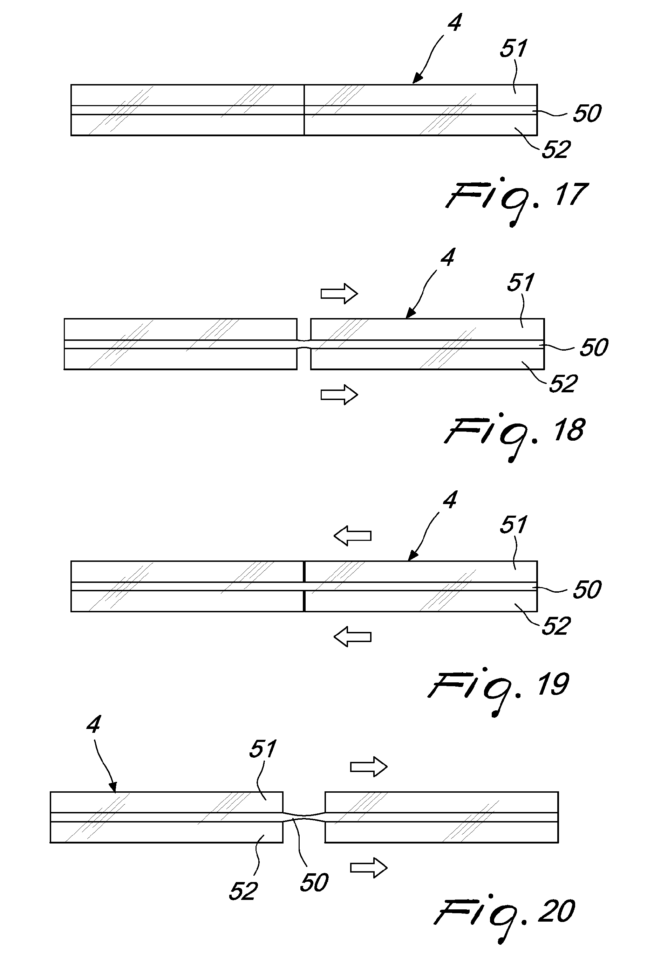

Figures 17, 18, 19 and 20 are views, in succession, of the steps of scoring and cut-running a sheet, and of the steps of subsequent alternating movement in order to achieve separation of the plastic layer.

With reference to the figures, the machine for cutting glass sheets in general and laminated glass sheets in particular, according to the invention, generally designated by the reference numeral 1, comprises a supporting frame 2, which defines a supporting table 3 for the sheet 4 being worked.

On the supporting frame there is, in a per se known manner, a fixed crossmember 5, which is provided with means for removable retention of the sheet being worked, generally designated by the reference numeral 6.

An upper scoring head 7 and a lower scoring head 8 are positioned correspondingly on the crossmember and on the frame, and the cut-running means are associated therewith in a per se known manner.

There is also a movable crossmember, designated by the reference numeral 10, which is arranged on the opposite side of the fixed crossmember with respect to the scoring and cut-running line and supports means 11 for clamping the sheet 4 being worked, which are supported by means for translational motion along a line of motion with an orientation that is substantially perpendicular to the scoring and cut-running line.

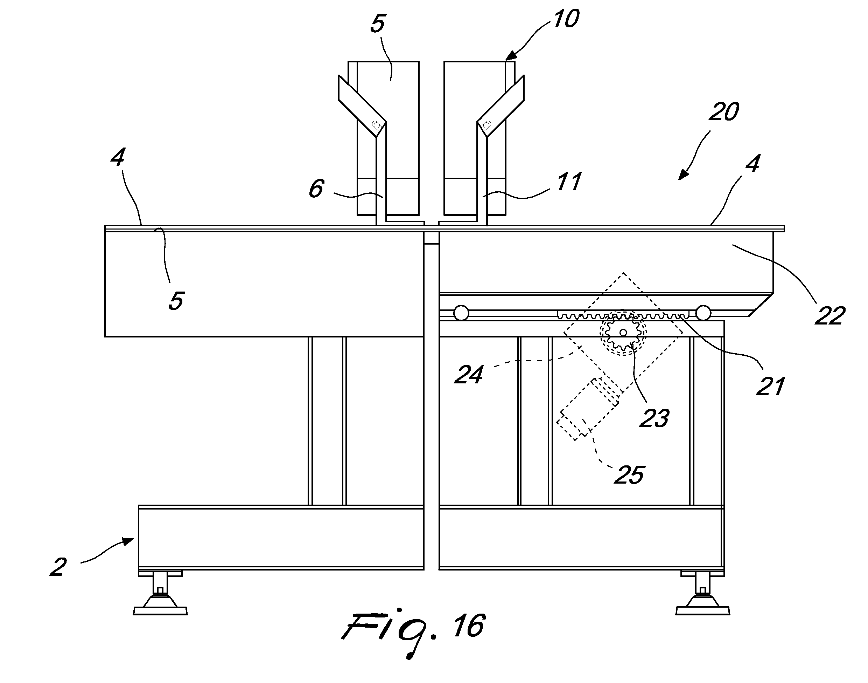

As shown in Figure 16, the translational motion means are constituted by a rack 21, which is fixed on a movable plane 22 that is connected to the movable crossmember 10.

A pinion 23 engages the rack 21 and, by means of a gearmotor 24, is driven by a brushless motor managed by a numeric control center.

An important feature of the invention resides in that the clamping means can perform a translational motion, in a position for clamping on the sheet 4, in both directions along the defined line of movement.

This innovative solution allows to provide so-called trimmings and move them away automatically.

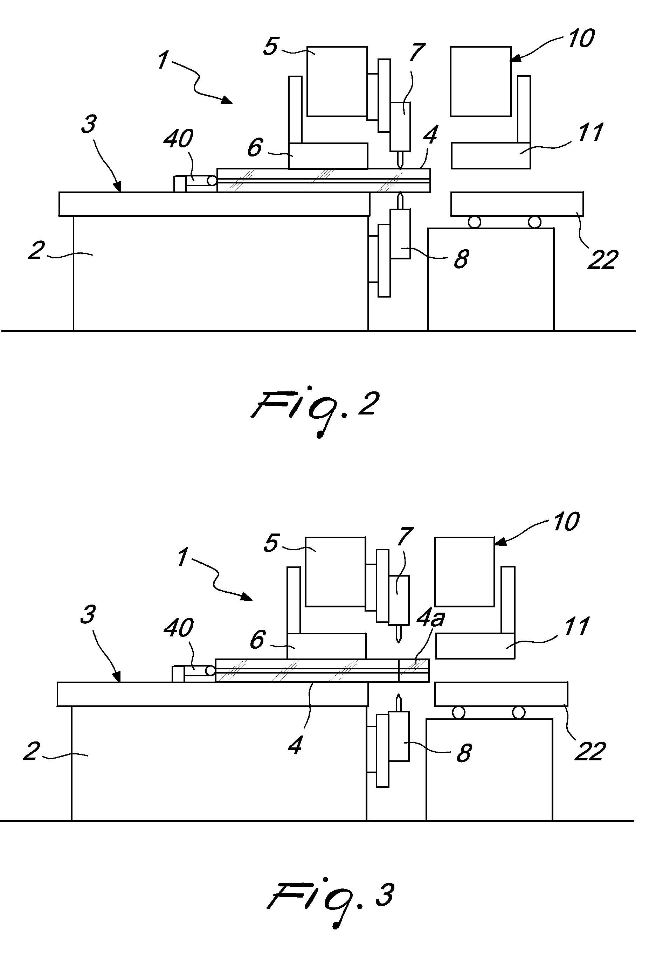

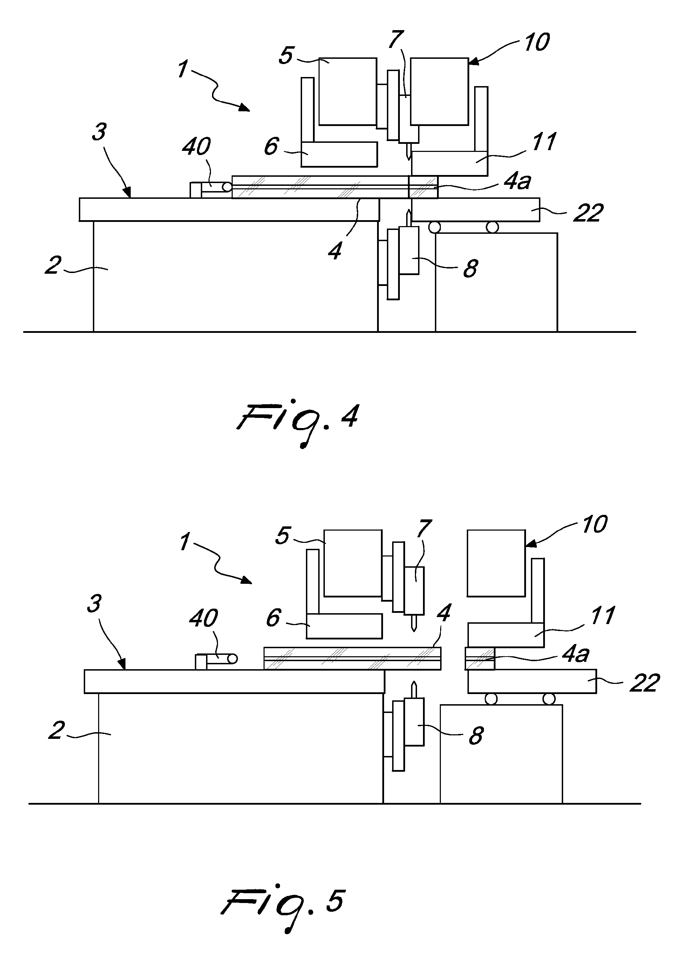

With reference to Figures 2 to 4, the step of positioning the sheet (Figure 2), of scoring and cut-running (Figure 3), and of separating the trimming (Figure 4) are shown.

Once the trimming, designated by the reference numeral 4a in Figure 2, has been separated (Figure 5), the trimming 4a is returned into contact with the sheet 4 from which it has been separated by virtue of the fact that the clamping means 11 are in the clamping position and the translational motion means 21 move in the opposite direction with respect to the separation direction.

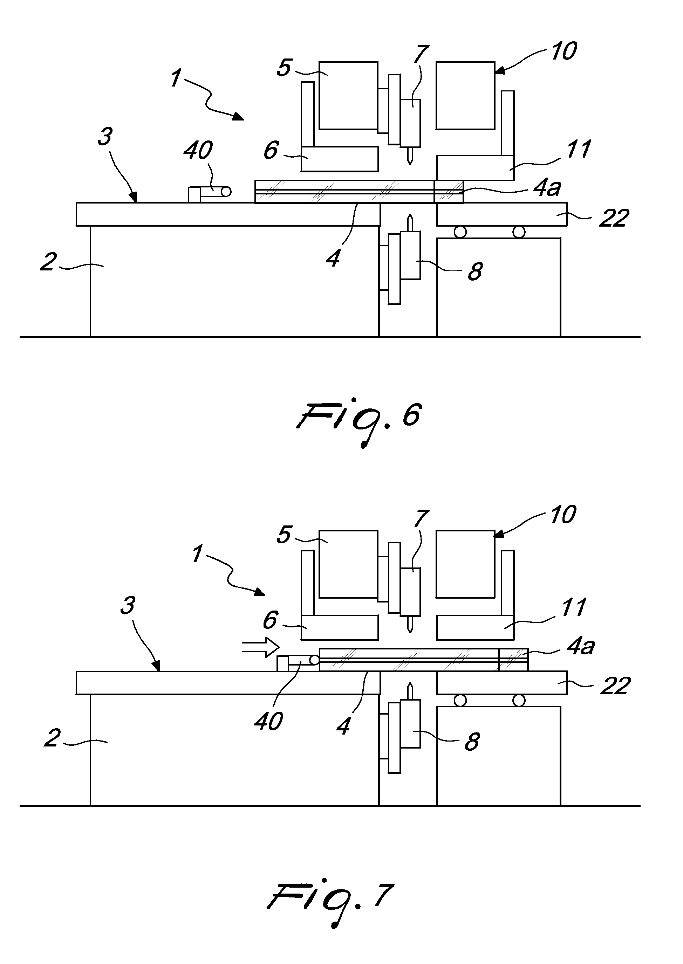

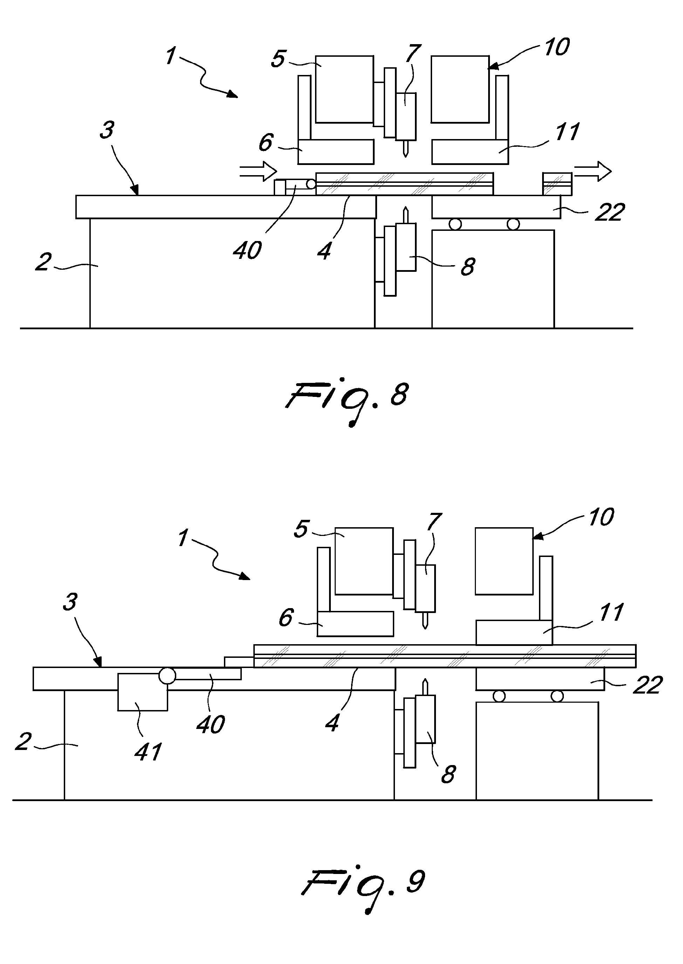

Once the trimming 4a has been brought into contact with the sheet 4 (Figure 6), the sheet 4 is used as a pusher, which moves the trimming 4a from the work area (Figure 7), until it arrives at a point where other pick-up means perform the spacing and removal of the trimming (Figure 8).

In this operating step, it is particularly important that the clamping means 11 can move, in a position for clamping on the sheet 4 or on a portion thereof, in both directions of the movement orientation, since this allows to arrange the trimming 4a back against the sheet 4 in order to utilize the sheet 4 itself as an evacuation element.

The machine has positioning and translational motion means, which are constituted by an abutment body 40 that is connected to lowering means 41, which allow to remove the abutment means 40 from the worktable, so that they can perform a translational motion below the sheet 4 being worked.

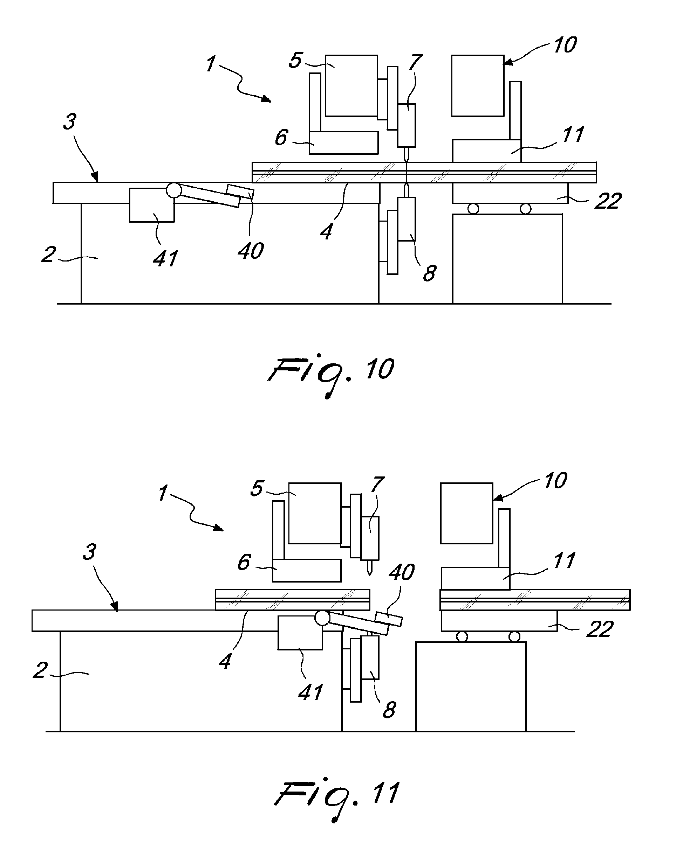

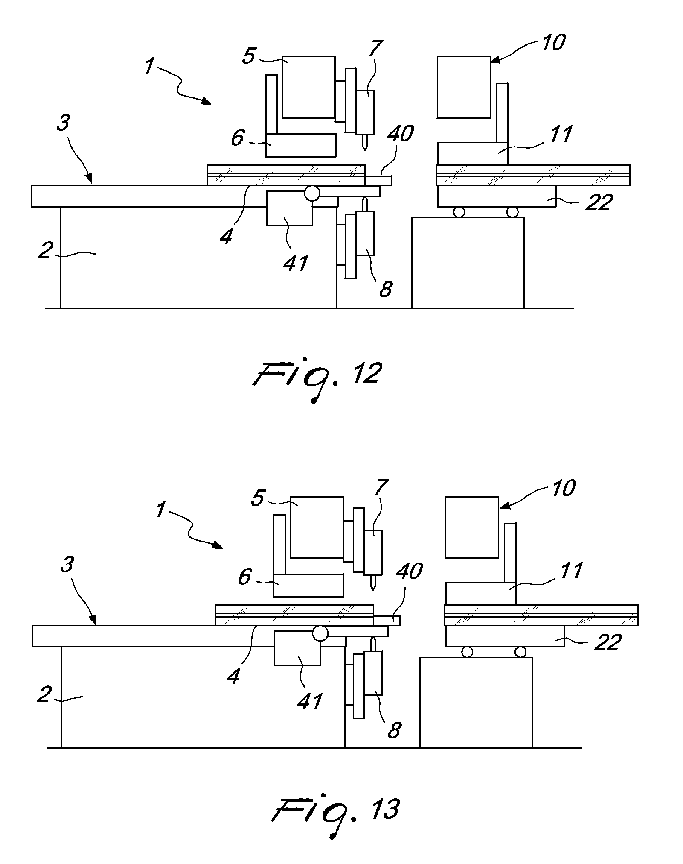

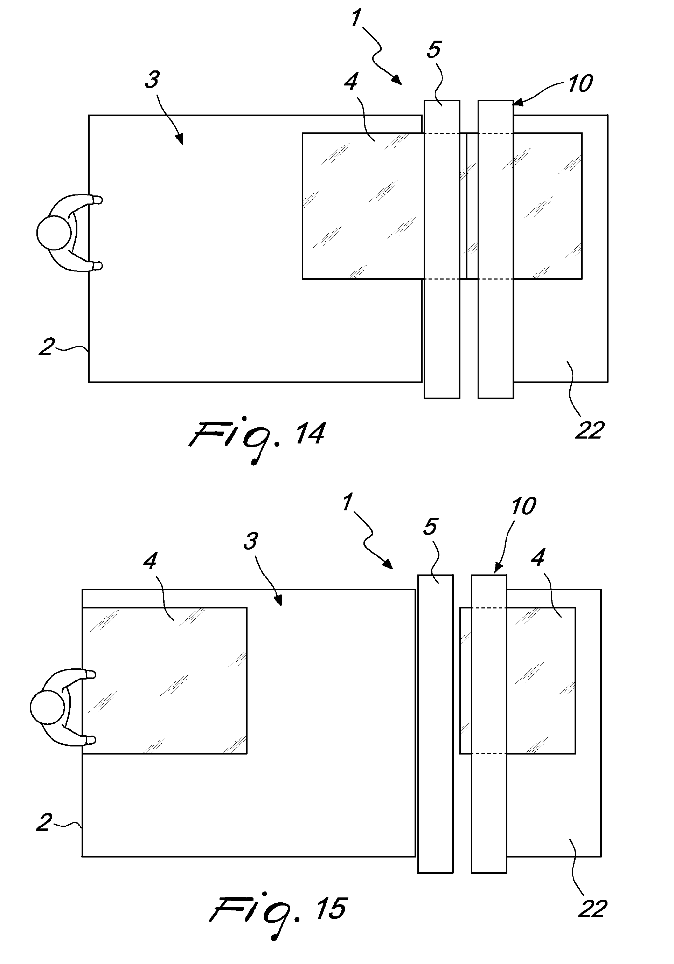

As indicated in Figures 9 to 15, the abutment 40 can be used, during pushing, to position exactly the sheet 4 below the scoring heads (7, 8) of the cut-running means, in practice pushing the sheet 4 for engagement of the abutment 40 with the free edge of the sheet.

Once scoring, cut-running and separation have been performed, the positioning and translational motion means 40 can be made to move downwardly and perform a translational motion below the sheet 4, so that they can engage the edge of the sheet 4 where scoring was performed, so as to remove the cut sheet automatically, as shown in Figures 9 to 15.

With the described solution, therefore, it is possible to automatically move the sheet 4 away toward the operator, without the operator having to intervene manually on the machine.

Another important element of the invention consists in that the translational motion means 40 described earlier allow to perform a movement of the separation assembly that allows to prevent delamination, i.e., parting of the plastic film and the glass sheets 4.

Movement, which occurs with an electronically controlled axis, where the pinion 23 is arranged, allows to control and manage, precisely and continuously, the entire work cycle, allowing to separate the plastic film by means of a separation cycle that occurs according to a preset sequence of alternated movements along the movement line defined earlier.

This continuous sequence of movements for approach and spacing in practice produces yielding of a plastic film 50, which is separated without it being torn from within the two glass sheets, designated by the reference numerals 51 and 52.

This solution differs from the background art, which provides for separation of the plastic film by traction performed only in the spacing direction.

On an experimental level, it is possible to consider that the sequence of approach and spacing cycles might create an initial yielding of the plastic film and that with its subsequent reapproach, the conditions of equilibrium of the glass/plastic structure might be partially restored and then, during subsequent spacings, since the plastic film has already yielded, the forces might concentrate more in the yielding region, causing its separation without applying appreciable forces to the adhesion between the film and the glass.

From what has been described above it is evident that the invention achieves the intended aim and objects, and in particular the fact is stressed that an operating sequence is provided in which it is possible to cut trimmings even of a few centimeters with automatic removal from the machine; it is also possible to automatically move away the cut sheet by using the positioning means, which are capable of positioning the sheet for cutting and of picking up the sheet to move it toward the operator, thanks to the fact that the positioning means can arrange themselves below the worktable, so as to perform a translational motion in order to engage the opposite edge of the sheet.

Another very important aspect of the invention consists in that by performing a continuous cycle of steps of approach and spacing of the cut-run parts, it is possible to achieve separation of the plastic film without causing the typical delamination of the solutions of the background art.

The invention thus conceived is susceptible of numerous modifications and variations, all of which are within the scope of the appended claims.

All the details may further be replaced with other technically equivalent elements.

In practice, the materials used, so long as they are compatible with the specific use, as well as the contingent shapes and dimensions, may be any according to requirements.

The disclosures in Italian Patent Application No. MI2008A000425 from which this application claims priority are incorporated herein by reference.

Where technical features mentioned in any claim are followed by reference signs, those reference signs have been included for the sole purpose of increasing the intelligibility of the claims and accordingly, such reference signs do not have any limiting effect on the interpretation of each element identified by way of example by such reference signs.

## Claims

1. A machine (1) for cutting glass sheets (4) in general and laminated glass sheets in particular, comprising, on a supporting frame (2), a table (3) for supporting the sheets being worked with a fixed crossmember (5) that supports means (6) for removable retention of the sheet (4) being worked, there being also lower (8) and upper (7) scoring heads, lower and upper cut-running means, and a movable crossmember (10) arranged on the opposite side of said fixed crossmember (5) with respect to the scoring and cut-running line, said movable crossmember supporting means (11) for fixing said sheet being worked, which are connected to means (21) for translational motion along a motion orientation substantially at right angles to said scoring and cut-running line, **characterized in that** said fixing means can perform a translational motion, in the position for fastening on said sheet (4), along both directions of said movement line.

2. The machine according to claim 1, **characterized in that** said means for translational motion comprise a rack (21), which is fixed to a movable table (22) that is associated with said movable crossmember (10), a pinion (23) connected to motor means engaging said rack (21).

3. The machine according to the preceding claims, **characterized in that** said motor means comprise a brushless motor that is managed by a numeric-control filter.

4. The machine according to one or more of the preceding claims, **characterized in that** it comprises means for positioning and translational motion of the sheets (4) being worked, which comprise an abutment body (40) that is associated with means (41) for dropping below said table (3), said positioning means being able to perform a translational motion below the sheet (4) being worked in order to act selectively as an element for positioning said sheet (4) in order to cut the sheet to the desired size and as an element for translational motion of the cut sheet (4) by engagement of the opposite edge.

5. The machine according to one or more of the preceding claims, **characterized in that** said positioning and translational motion means perform the positioning to size of the sheet (4) to be cut and the spacing of the cut sheet.

6. A method for cutting and removing trimming (4a) of laminated glass sheets, comprising the step of scoring, cut-running and separating a trimming of a glass sheet with its separation by way of clamping means (11), **characterized in that** it comprises, by way of said clamping means (11), a step of moving the trimming (4a) back against the sheet (4) from which it has been cut, of releasing said trimming, and a translational motion of said sheet for the removal of the trimming toward an evacuation region.

7. A method for cutting laminated glass sheets (4), comprising the steps of scoring and cut-running the sheets, **characterized in that** it performs, after cut-running, an alternating cycle of spacing and reapproach of the cut-run portions of sheet (4) in order to provide yielding of the plastic layer interposed between said sheets.
